# FASCICULE DE BREVET EUROPEEN

(11) **EP 0 578 524 B1**
(45) Date de publication et mention de la délivrance du brevet: **08.10.1997**
(21) Numéro de dépôt: 93401584.3
(22) Date de dépôt: 21.06.1993
(51) Int. Cl.: C21D 9/60, C21D 9/00

(54) **Dispositif de sécurité de modules de chauffage ou de réchauffage inductif de produits métallurgiques**
Sicherheitsvorrichtung für Heizungseinheiten zum induktiven Erwärmen von metallurgischen Produkten
Safety device for heating modules for the induction heating of metallurgical products

(30) Priorité: 24.06.1992 FR 9207740
(43) Date de publication de la demande: 12.01.1994
(73) Titulaire: Société CELES, F-91002 Evry Cédex (FR)
(72) Inventeur: Couffet, Claude, F-93100 Montreuil (FR); Hellegouarc'h, Jean, F-94170 Le Perreux/Marne (FR); Prost, Gérard, F-94260 Fresnes (FR); Uring, Jean Camille, F-68000 Colmar (FR)
(74) Mandataire: Armengaud Ainé, Alain

(56) Documents cités:
- EP-A- 0 183 209
- US-A- 3 705 967
- PATENT ABSTRACTS OF JAPAN vol. 3, no. 14 (C-36)(139) 8 Février 1979 & JP-A-53 141 113 (MITSUBISHI DENKI) 12 Aoüt 1978
- CAHIERS D'INFORMATIONS TECHNIQUES DE LA REVUE DE METALLURGIE vol. 82, no. 4 , Avril 1985 , PARIS FR pages 339 - 348 M. KASE ET AL 'Pratique du laminage direct sur train à bandes à chaud de brames coulés en continu'

## Description

La présente invention est relative aux systèmes de chauffage au défilé par induction de produits métalliques, tels que notamment des ébauches ou des produits en bande.

On sait que ces systèmes de chauffage par induction sont couramment utilisés dans des installations de traitement de produits métallurgiques (bandes métalliques, ébauches, brames, etc) provenant d'installations de coulée, notamment de coulée continue et devant être acheminés à des systèmes de laminage. L'invention s'applique notamment au chauffage au défilé des rives de produits métallurgiques plats qui doivent être réchauffés avant leur passage entre les cylindres d'un système de laminage. Dans les installations utilisées pour ces traitements, le chauffage par induction est réalisé à l'aide de modules de réchauffage entre les inducteurs desquels défile le produit en continu.

Les modules de réchauffage de rives actuellement connues sont donc soit pourvus d'inducteurs supérieur et inférieur indépendants, soit d'inducteurs supérieur et inférieur articulés autour d'un axe commun. Ces systèmes permettent donc d'accepter un défaut dimensionnel du produit traité par augmentation de la valeur de l'entrefer c'est-à-dire de la distance verticale séparant les inducteurs supérieur et inférieur. Ces systèmes connus sont donc pourvus de détecteurs de défaut couplés à un moyen assurant une ouverture rapide des inducteurs. Cependant, en cas de coupures sur le réseau d'alimentation électrique des inducteurs, il peut arriver qu'un produit, notamment une ébauche soit engagée sous les inducteurs. Dans ce cas, la sécurité des matériels peut ne pas être totalement assurée par l'absence de moyens de retrait des modules.

L'invention se propose d'apporter un dispositif permettant d'assurer une sécurité intrinsèque des modules de chauffage inductif dans des installations du type mentionné ci-dessus.

En conséquence l'invention concerne un dispositif de sécurité pour modules de chauffage ou de réchauffage par induction électro magnétique, au défilé, des rives d'un produit métallurgique plat, dispositif dans lequel chacun desdits modules est monté mobile sur une voie de roulement perpendiculaire au sens de défilement du produit caractérisé en ce qu'il comporte un contre-poids embarqué dont l'énergie potentielle peut être à tout instant immédiatement utilisée pour agir sur un moyen assurant un déplacement rapide dudit module sur sa voie de roulement le dégageant ainsi du produit.

Selon un mode de réalisation préféré du dispositif selon l'invention, le contre-poids embarqué dans chaque module est monté coulissant sur une ou plusieurs chaînes ou similaires, dont il peut être rendu solidaire par une butée fixée sur ladite chaîne sur laquelle il s'appuie pour passer d'une position haute à une position basse lors d'un retrait rapide dudit module, la ou lesdites chaînes étant en prise avec un pignon engrénant sur une crémaillère fixée au sol parallèlement à la voie de roulement de manière que la rotation dudit pignon, résultant de la descente du contre-poids, provoque le déplacement du module le long de ladite crémaillère sur sa voie de roulement.

Selon une variante de la présente invention, la chaîne entraîne directement l'une des roues du module, ce dernier étant ainsi déplacé le long de sa voie de roulement lors de la descente du contre-poids.

Selon une autre caractéristique de la présente invention, le dispositif comporte un moteur électrique embarqué sur chaque module pouvant entraîner ledit pignon, ou ladite roue par l'intermédiaire d'un embrayage, pour assurer le retour du contre-poids en position haute, en position travail à partir de la position garage dans laquelle le contre-poids est en position basse.

D'autres caractéristiques et avantages de la présente invention, ressortiront de la description faite ci-après en- référence aux dessins annexés qui en illustrent un exemple de réalisation dépourvu de tout caractère limitatif. Sur les dessins :
- la figure 1 est une vue en perspective d'un des modules de chauffage par induction perfectionné selon la présente invention ;
- la figure 2 est une vue schématique en élévation frontale représentant la disposition des deux modules prévus pour le chauffage des rives d'un produit métallurgique plat, les deux modules étant représentés en position de travail et ,
- les figures 3, 4 et 5 sont des vues schématiques en élévation frontale représentant l'un des modules illustré par les figures 1 et 2 respectivement en position travail, en position retour et en position garage.

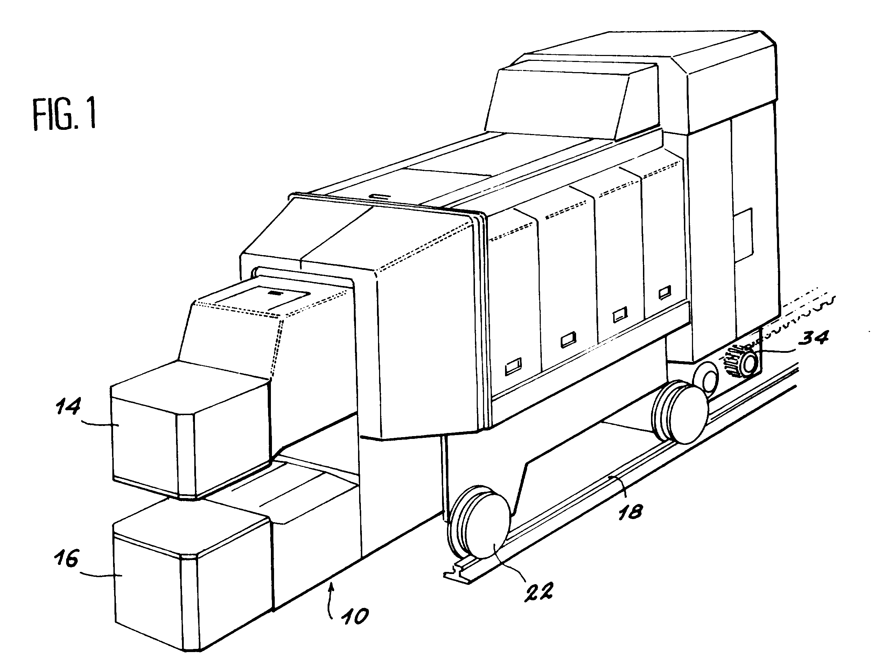

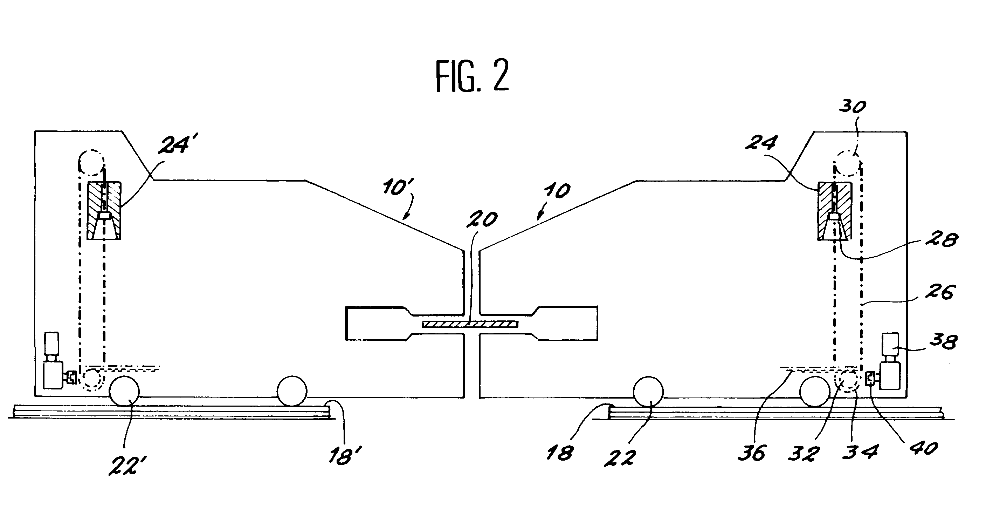

En se référant au dessin, notamment à la figure 2 on voit que comme connu, l'installation comporte deux modules identiques respectivement 10, 10' chacun étant muni d'inducteurs supérieur 14 et inférieur 16 (voir la figure 1) entre lesquelles passent le produit à chauffer ou à réchauffer 20 constitué ici d'une ébauche 20. Ces inducteurs sont de type bien connus de l'homme de l'art, ils ne font pas partie de l'invention et par conséquent, il ne semble pas utile de les décrire en détail.

Chaque module de chauffage ou de réchauffage tel que 10 ou 10' est monté mobile sur une voie de roulement respectivement 18, 18' perpendiculaire au sens de déplacement du produit 20 entre les inducteurs, chaque module comportant à cet effet des roues telles que 22, 22'. Il comporte en outre un contre-poids, respectivement 24, 24', embarqué sur le module considéré, dont l'énergie potentielle peut être à tout instant immédiatement libérée pour agir sur un moyen qui, selon l'invention assure un déplacement rapide de chaque module sur sa voie 18 ou 18' afin de dégager le produit 20 de l'entrefer des inducteurs.

Dans l'exemple de réalisation non limitatif illustré sur les figures 2 à 4, chaque contre-poids tel que 24 est monté coulissant sur une chaîne 26 ou similaire dont il peut être rendu solidaire grâce à la présence d'une butée 28 fixée à la chaîne et sur laquelle il s'appuie comme on le voit clairement sur le dessin. Cette chaîne est tendue entre deux roues à chaine 30, 32, la roue inférieure 32 étant solidaire d'un pignon 34, tourillonant sur le bâti du module, en prise sur une crémaillère 36 fixée au sol et parallèle à la voie de roulement telle que 18 du module considéré.

Bien entendu, on peut sans sortir du cadre de l'invention utiliser tout moyen équivalent à la chaîne 26 par exemple un ou plusieurs câbles ou une ou plusieurs bandes sans fin tendue entre deux poulies similaires aux roues à chaîne 30 ou 32, la poulie inférieure étant alors accolée (comme la roue 32) au pignon 34 en prise avec la crémaillère. Chaque module comporte en outre un moteur électrique tel que 38 assurant l'entraînement du pignon 34 par l'intermédiaire d'un embrayage 40.

Selon une variante de la présente invention, la ou les chaînes entraînent directement l'une des roues, telles que 22, du module, ce dernier étant ainsi déplacé le long de sa voie de roulement 18 lors de la descente du contrepoids. Dans cette variante, le moteur électrique tel que 38 assure l'entraînement de ladite roue. Le fonctionnement du dispositif de sécurité intrinsèque selon la présente invention est le suivant :

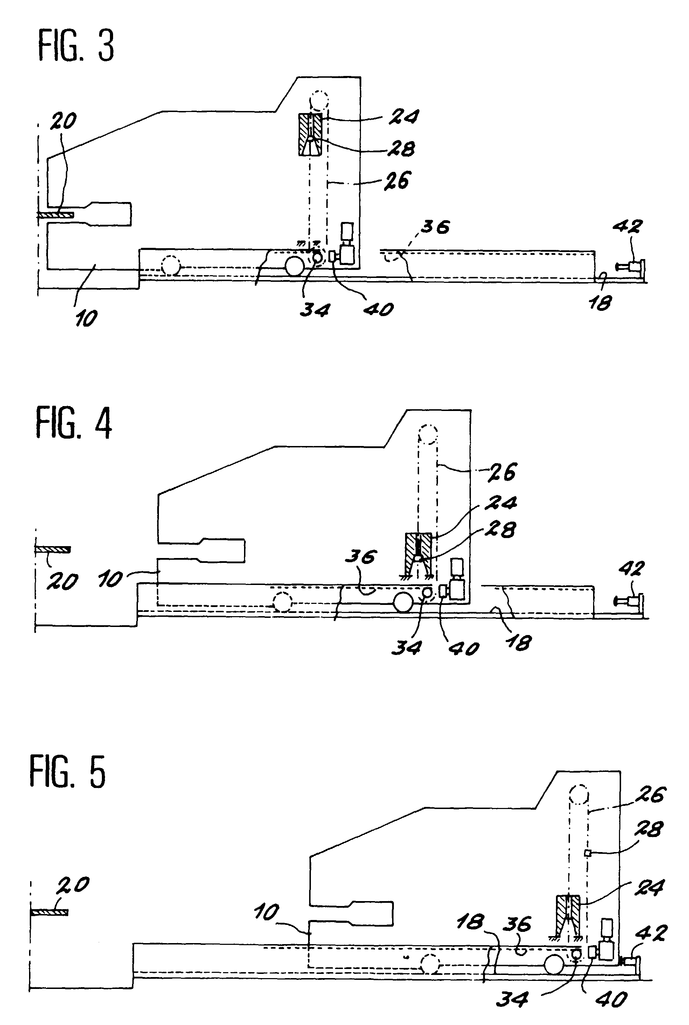

### 1 - Position travail (figure 3)

Dans cette position, le module de chauffage ou de réchauf fage, ici le module 10 est disposé de façon que l'ébauche 20 à traiter soit située dans l'entrefer séparant les inducteurs. Le contre-poids 24 est en postion haute, maintenue sur sa butée 28 et l'embrayage 40, en position embrayée, empêche toute rotation du pignon 34 le long de la crémaillère 36.

### 2 - Position retour (figure 4)

Lors d'un dysfonctionnement observé sur l'ensemble du réchauffage des rives de l'ébauche 20 résultant par exemple d'un défaut dimensionnel de cette ébauche 20, non susceptible d'être acceptée par l'entrefer des inducteurs d'un module tel que 10 ou 10', l'embrayage 40 passe immédiatement en position débrayée, ce qui provoque la libération immédiate de l'énergie potentielle du contrepoids 24, qui passe de la position haute illustrée par la figure 3, à la position basse représentée sur la figure 4. Lors de ce déplacement du contre-poids, la chaîne 26 provoque la rotation du pignon 34 qui se déplace alors le long de la crémaillère 36 provoquant ainsi un déplacement rapide du module vers la droite du dessin c'est-à-dire dans une position où le produit 20 est dégagé de l'emprise des inducteurs du module considéré. On a ainsi garanti la sécurité du matériel. Selon l'invention, on prévoit un butoir ou similaire 42, de façon à contrôler la longueur de la course du déplacement de retour de chaque module de chauffage ou de réchauffage tel que 10 ou 12.

### 3 - Position garage (figure 5)

Dans cette position, le contre-poids 24 est à la partie inférieure de sa course, il est libéré de sa butée 28 qui est remontée avec la chaîne 26 par suite de l'inertie du système et l'embrayage 40 est débrayé. A partir de cette position, le module peut être ramené dans la position illustrée par la figure 3 par mise en action du moteur 38 qui entraîne le pignon 34 le long de la crémaillère 36, l'embrayage 40 étant en position embrayée. Au cours de ce mouvement, le système de sécurité est réarmé étant donné que le contrepoids 24 en appuie sur sa butée 28 est ramené par le déplacement de la chaîne 26 dans la position travail illustré par cette figure 3.

Parmi les avantages apportés par le système objet de l'invention tel que décrit ci-dessus, on citera notamment les suivants :
- augmentation de la puissance unitaire des modules de chauffage ou de réchauffage par suppression de l'articulation magnétique (effets d'attraction magnétique des culasses des inducteurs) ;
- simplification des mécanismes gérant l'ensemble des mouvements des modules ;
- suppression des vibrations des culasses et des efforts résultant sur les pivots ;
- suppression de toute source de puissance auxiliaire pour armer le dispositif de sécurité et
- obtention d'une sécurité thermique totale des matériels lors d'une absence de refroidissement résultant par exemple d'une coupure du réseau électrique d'alimentation des inducteurs des modules.

Il demeure bien entendu que la présente invention n'est pas limitée à l'exemple de réalisation décrit et ou représenté.

## Revendications

1. Dispositif de sécurité pour modules de chauffage ou de réchauffage par induction électro magnétique, au défilé, des rives d'un produit métallurgique plat, dispositif dans lequel chacun desdits modules (10-10') est monté mobile sur une voie de roulement (18, 18') perpendiculaire au sens de défilement du produit (20) caractérisé en ce qu'il comporte un contre-poids (24) embarqué dont l'énergie potentielle peut être à tout instant immédiatement utilisée pour agir sur un moyen (34, 36) assurant un déplacement rapide dudit module sur sa voie de roulement le dégageant ainsi du produit.

2. Dispositif de sécurité selon la revendication 1 caractérisé en ce que le contre poids (24) embarqué dans chaque module est monté coulissant sur une ou plusieurs chaînes (26) ou similaire, dont il peut être rendu solidaire par une butée (28) fixée sur ladite chaîne sur laquelle il s'appuie pour passer d'une position haute à une position basse lors d'un retrait rapide dudit module, ladite chaîne étant en prise avec un pignon (34) engrénant sur une crémaillère (36) fixée au sol parallèlement à la voie de roulement de manière que la rotation dudit pignon, résultant de la descente du contrepoids, provoque le déplacement du module le long de ladite crémaillère sur sa voie de roulement.

3. Dispositif de sécurité selon la revendication 1 caractérisé en ce que , la ou lesdites chaînes (26) entraînent directement au moins l'une des roues du module, ce dernier étant ainsi déplacé le long de sa voie de roulement (18, 18') lors de la descente du contre-poids (24).

4. Dispositif de sécurité selon l'une quelconque des revendications précédentes caractérisé en ce qu'il comporte un moteur électrique (38) embarqué sur chaque module pouvant entraîner ledit pignon (34) ou ladite roue du module, par l'intermédiaire d'un embrayage (40), pour assurer le retour du contre-poids en position haute, en position travail à partir de la position garage dans laquelle le contre-poids est en position basse.

## Patentansprüche

1. Sicherheitsvorrichtung für Heizungs- oder Nacherwärmungseinheiten zum elektromagnetischen induktiven Erwärmen von Kanten eines flachen metallurgischen Werkstücks in einem schmalen Durchgang, wobei jede dieser Einheiten (10 - 10') auf senkrecht zur Durchgangsrichtung des Werkstücks (20) ausgerichteten Schienen (18, 18') beweglich geführt ist,
**gekennzeichnet durch**
ein angeordnetes Gegengewicht (24), dessen Lageenergie jederzeit unmittelbar genutzt werden kann, um so auf Mittel (34, 36) einzuwirken, daß ein rasches Verschieben dieser Einheit auf ihren Schienen gewährleistet ist und so das Werkstück freigelegt wird.

2. Sicherheitsvorrichtung nach Anspruch 1
**gekennzeichnet durch**
das in jeder Einheit angeordnete Gegengewicht (24), das auf einer oder mehreren Ketten (26) oder ähnlichem verschiebbar montiert ist, wobei dieses auf der Kette über einen auf dieser Kette angeordneten Anschlag (28) festgehalten wird und auf dem es beim Übergang von einer hohen zu einer niedrigen Lage während des raschen Rückzugs dieser Einheit aufliegt, wobei diese Kette mit einem Zahnrad (34) zusammenwirkt, das in eine auf dem Boden parallel zu den Schienen angeordnete Zahnstange (36) so eingreift, daß die aus dem Absenken des Gegengewichts resultierende Rotationsbewegung dieses Zahnrads ein Verschieben der Einheit auf den Schienen entlang dieser Zahnstange bewirkt.

3. Sicherheitsvorrichtung nach Anspruch 1
**dadurch gekennzeichnet**,
daß die Kette/Ketten (26) mindestens ein Schienenrad der Einheit direkt antreibt/antreiben, so daß diese während dem Absenken des Gegengewichts (24) entlang ihrer Schienen (18, 18') verschoben wird.

4. Sicherheitsvorrichtung nach einem der vorhergehenden Ansprüche
**gekennzeichnet durch**
einen in jeder Einheit angeordneten Elektromotor (38), der das Zahnrad (34) oder das Schienenrad der Einheit über eine Kupplung (40) so antreibt, daß die Rückkehr des Gegengewichts von einer niedrigen Lage während der Abstellposition der Einheit in eine hohe Lage während der Betriebsstellung der Einheit gewährleistet ist.

## Claims

1. Safety device for modules for heating or reheating, by electromagnetic induction, the edges of a flat iron or steel product as it travels past, in which device each of said modules (10, 10') is mounted movable on a roller track (18, 18') perpendicular to the direction of travel of the product (20), characterized in that it comprises an on-board counterweight (24), the potential energy of which can be immediately used at any instant for acting on a means (34, 36) assuring a rapid displacement of said module on its roller track, thus disengaging it from the product.

2. Safety device according to claim 1, characterized in that the counterweight (24) mounted on-board each module is mounted sliding on one or more chains (26) or the like, with which it can be made integral by a stop (28) fixed to said chain, against which it bears for passing from a high position to a low position during a rapid withdrawal of said module, said chain being in engagement with a pinion (34) engaging on a toothed rack (36) fixed to the floor parallel to the roller track in such a way that the rotation of said pinion, resulting from the descent of the counterweight, causes the displacement of the module along said toothed rack on its roller track.

3. Safety device according to claim 1, characterized in that the chain or chains (26) directly drive at least one of the wheels of the module, the latter being thus displaced along its roller track (18, 18') during the descent of the counterweight (24).

4. Safety device according to any one of the preceding claims, characterized in that it comprises an electric motor (38) mounted on each module and capable of driving said pinion (34) or said wheel of the module, by means of a gear system (40), for assuring the return of the counterweight into its high position, into its working position from the parking position in which the counterweight is in a low position.
